# EUROPÄISCHE PATENTSCHRIFT

(11) **EP 3 411 680 B1**
(45) Veröffentlichungstag und Bekanntmachung des Hinweises auf die Patenterteilung: **12.02.2020**
(21) Anmeldenummer: 16805831.1
(22) Anmeldetag: 05.12.2016
(51) Int. Cl.: G01J 3/08, G01J 3/447, G01J 3/02

(54) **MINIATURSPEKTROMETER UND VERFAHREN ZUM SCHALTEN EINES MINIATURSPEKTROMETERS ZWISCHEN ABBILDUNGSMODUS UND SPEKTROMETERMODUS**
MINIATURE SPECTROMETER AND METHOD FOR SWITCHING A MINIATURE SPECTROMETER BETWEEN IMAGING MODE AND SPECTROMETER MODE
SPECTROMÈTRE MINIATURE ET PROCÉDÉ DE COMMUTATION D'UN SPECTROMÈTRE MINIATURE ENTRE UN MODE DE REPRODUCTION ET UN MODE SPECTROMÈTRE

(30) Priorität: 02.02.2016 DE 102016201572
(43) Veröffentlichungstag der Anmeldung: 12.12.2018
(73) Patentinhaber: Robert Bosch GmbH, 70442 Stuttgart (DE)
(72) Erfinder: HERRMANN, Ingo, 71292 Friolzheim (DE); HUSNIK, Martin, 75210 Keltern (DE); BAUMGART, Eugen, 70376 Stuttgart (DE); HUBER, Christian, 71638 Ludwigsburg (DE); STEIN, Benedikt, 70193 Stuttgart (DE)
(86) Internationale Anmeldenummer: PCT/EP2016/079710
(87) Internationale Veröffentlichungsnummer: WO 2017/133810

(56) Entgegenhaltungen:
- US-A1- 2015 211 926
- CHUNMIN ZHANG ET AL: "Wide-field-of-view polarization interference imaging spectrometer", APPLIED OPTICS, Bd. 43, Nr. 33, 20. November 2004 (2004-11-20), Seite 6090, XP055348774, WASHINGTON, DC; US ISSN: 0003-6935, DOI: 10.1364/AO.43.006090 in der Anmeldung erwähnt
- BLAIN PASCAL ET AL: "Combining shearography and interferometric fringe projection in a single device for complete control of industrial applications", OPTICAL ENGINEERING, SOC. OF PHOTO-OPTICAL INSTRUMENTATION ENGINEERS, BELLINGHAM, Bd. 52, Nr. 8, 1. August 2013 (2013-08-01) , Seite 84102, XP060025991, ISSN: 0091-3286, DOI: 10.1117/1.OE.52.8.084102 [gefunden am 2013-08-09]
- WEI XIANGYU ET AL: "Study on full-polarization hyperspectral imaging technology", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, Bd. 9142, 21. Februar 2014 (2014-02-21), Seiten 91421Z-91421Z, XP060038189, DOI: 10.1117/12.2057667 ISBN: 978-1-62841-730-2

## Beschreibung

Die Erfindung betrifft ein Miniaturspektrometer und ein Verfahren zum Schalten eines Miniaturspektrometers zwischen Abbildungsmodus und Spektrometermodus.

### Stand der Technik

Die Erfindung geht von einem Miniaturspektrometer und einem Verfahren zum Schalten eines Miniaturspektrometers zwischen Abbildungsmodus und Spektrometermodus mit den Merkmalen der unabhängigen Patentansprüche aus.

In "A static polarization imaging spectrometer based on a Savart polariscope" (Zhang et al., Optics Communications 203 (2002), 21-26) wird ein abbildendes Polarisationsspektrometer (PIS) beschrieben. Das PIS basiert auf einem einfachen Savart-Polariskop. Das Savart-Polariskop erzeugt eine zweidimensionale Intensitätsverteilung, die in einer Raumrichtung das Interferogramm und in der dazu orthogonalen Richtung die Bildinformation enthält. Beide Komponenten liegen dabei gleichzeitig vor und müssen voneinander getrennt werden. Diese zweidimensionale Verteilung wird mittels eines zweidimensionalen CCD (charge-coupled device = ladungsgekoppeltes Bauteil) Detektors aufgenommen. Das PIS umfasst eine Unendlich-Optik, ein Polarisationsinterferometer, das einen Polarisator, ein Savart-Polariskop, umfassend zwei doppelbrechende Kristalle und einen Analysator umfasst, eine Abbildungslinse und ein System zur Signalaufnahme und Signalverarbeitung.

Aus "Wide-field-of-view polarization interference imaging spectrometer" (Zhang et al., Applied Optics 43.33 (2004), 6090-6094) ist ein modifiziertes Savart-Polariskop bekannt. Zwischen einem ersten doppelbrechenden Kristall und einem zweiten doppelbrechenden Kristall mit zueinander parallelen Hauptschnitten ist ein Halbwellenplättchen angeordnet. Dieses bewirkt eine Drehung der Polarisationsvektoren um jeweils 90°, sodass wie auch beim PIS der ordentliche Strahl des ersten doppelbrechenden Kristalls zum außerordentlichen Strahl des zweiten Kristalls wird und der außerordentliche Strahl des ersten doppelbrechenden Kristalls beim Eintritt in den zweiten doppelbrechenden Kristall zum ordentlichen Strahl wird. Vorteil eines solchen modifizierten Savart-Polariskops ist ein erhöhter Bereich von Einfallswinkeln der zur Verarbeitung genutzt werden kann.

### Kern und Vorteile der Erfindung

Die vorliegende Erfindung gibt ein Miniaturspektrometer und ein Verfahren zum Schalten eines Miniaturspektrometers zwischen Abbildungsmodus und Spektrometermodus mittels eines erfindungsgemäßen Miniaturspektrometers an.

Die Spektroskopie gehört zu den am weitesten verbreiteten Techniken der Analytik, mit der verschiedene Materialien auf ihre Zusammensetzung hin untersucht werden können. Eine Möglichkeit, die spektrale Information eines Objekts zu gewinnen, sind statische Fourier Spektrometer. Eine Miniaturisierung von Spektrometern ermöglicht einen breiteren Einsatz und eine Integration von Spektrometern in Verbraucherelektronik, wie beispielsweise Smartphones. Mit Hilfe eines Polarisators, eines Savart-Polariskops, eines Analysators und eines abbildenden Elements wie z.B. einer Linse kann das Interferogramm eines Objekts aufgenommen werden, um daraus numerisch das Spektrum der von diesem Objekt ausgesandten elektromagnetischen Strahlung zu berechnen. Dies ist beispielsweise in "A static polarization imaging spectrometer based on a Savart polariscope" (Zhang et al., Optics Communications 203 (2002), 21-26) beschrieben. Physikalisch kann die Funktionsweise so erklärt werden, dass zu jeder Wellenlänge ein kosinusförmiges Interferogramm gehört, mit einer von der Wellenlänge abhängigen Frequenz. Die lineare Überlagerung vieler solcher Interferenzmuster einer breitbandigen Lichtquelle ergibt ein komplexes Muster das mittels einer Fouriertransformation wieder in seine spektralen Anteile zerlegt werden kann. Diese Methode wird Fouriertransformations-Spektroskopie genannt.

Das Prinzip des Savart-Polariskops nach Zhang beruht darauf, dass ein von einem zu untersuchenden Objekt herrührender Lichtstrahl in einen ersten Strahl und einen zweiten Strahl mit vorzugsweise gleicher Intensität aufgespalten wird und der erste Strahl einen optisch längeren Pfad durchläuft als der zweite Strahl. Danach werden der erste Strahl und der zweite Strahl wieder auf einem Punkt in der Detektionsebene überlagert. Abhängig vom Unterschied des optischen Wegs und der daraus resultierenden Phasendifferenz interferieren der erste und der zweite Strahl und es entsteht ein Lichtfleck mit einer von der Differenz der Phasen des ersten und des zweiten Strahls abhängigen Intensität. Kern eines Savart-Polariskops sind ein Polarisator, zwei doppelbrechende Kristalle und ein Analysator. Tritt ein Lichtstrahl unter einem bestimmten Winkel in ein Savart-Polariskop, so wird dieser in einen ersten Strahl und einen zweiten Strahl geteilt. Der erste und der zweite Strahl verlassen das Polariskop wieder parallel zueinander in einem bestimmten Abstand. Durch eine Abbildungsoptik werden sie auf einen gemeinsamen Punkt in der Detektionsebene abgebildet. Der optische Gangunterschied der beiden Strahlen und die Position des gemeinsamen Abbildungspunktes hängen primär vom Einfallswinkel ab und erzeugen so ein zweidimensionales Interferogramm in der Bildebene. Dieses Interferenzmuster wird zusätzlich durch das zweidimensionale Bild des zu untersuchenden Objekts überlagert, das die elektromagnetische Strahlung ausgesandt hat. Nur falls das Savart-Polariskop mittels einer kontinuierlichen Bewegung mit einer bekannten Geschwindigkeit über das zu vermessende Objekt bewegt wird, kann sowohl ein Bild als auch das Spektrum des Objekts aufgenommen werden.

Ein Miniaturspektrometer ist ein Spektrometer mit Abmessungen im Zentimeterbereich, wobei auch geringere Abmessungen unterhalb des Zentimeterbereichs eingeschlossen sind. Ein Vorteil der Erfindung mit den Merkmalen der unabhängigen Patentansprüche ist, dass eine Abbildung eines zu untersuchenden Objekts möglich ist, ohne dass ein Interferogramm des Objektes überlagert ist, wie dies im Stand der Technik beschrieben ist. Daraus ergibt sich eine Verbesserung der Qualität der Abbildung gegenüber dem Fall, dass das Interferogramm überlagert ist. Zudem ist ein Schalten zwischen einem Abbildungsmodus, bei dem die Abbildung des Objekts ohne Überlagerung des Interferogramms aufgenommen wird und einem Spektrometermodus, bei dem das Interferogramm des Objekts aufgenommen wird, ohne mechanische Elemente möglich. Dadurch werden der Fertigungsaufwand und die Fehleranfälligkeit eines erfindungsgemäßen Miniaturspektrometers verringert. Zudem ermöglicht das Weglassen mechanischer Elemente vorteilhafterweise einen deutlich kompakteren Aufbau eines erfindungsgemäßen Miniaturspektrometers gegenüber dem Fall, dass das Miniaturspektrometer mechanische Elemente umfasst, da hierbei Bauraum für die Bewegung der mechanischen Elemente vorgesehen werden müsste. Ein weiterer Vorteil ist, dass im Abbildungsmodus ein zu untersuchendes Objekt, welches spektroskopiert werden soll, zentriert werden kann und anschließend durch Umschalten in den Spektrometermodus spektroskopiert werden kann. Dabei kann im Abbildungsmodus ein Interferogramm überlagert sein, da die Zentrierung auch mit einer qualitativ weniger hochwertigen Abbildung durchführbar ist.

Dies wird erreicht mittels eines Miniaturspektrometers zur Spektrometrie und zur Bilderfassung, umfassend eine Detektionseinheit zur Erfassung einer optischen Größe und eine optische Einheit. Die optische Einheit umfasst einen Polarisator, ein Savart-Element, welches ein erstes doppelbrechendes Element und ein zweites doppelbrechendes Element umfasst und einen Analysator. Das erfindungsgemäße Miniaturspektrometer zeichnet sich dadurch aus, dass im Strahlengang zwischen dem Polarisator und dem Savart-Element ein erstes Flüssigkristallelement angeordnet ist, welches dazu ausgelegt ist, eine vierte Polarisationsachse einer aus dem ersten Flüssigkristallelement austretenden Strahlung derart einzustellen, dass die aus dem ersten Flüssigkristallelement austretende Strahlung in einem Abbildungsmodus des Miniaturspektrometers das erste doppelbrechende Element ohne Aufspaltung durchläuft und dass die aus dem ersten Flüssigkristallelement austretende Strahlung in einem Spektrometermodus des Miniaturspektrometers im ersten doppelbrechenden Element in einen ersten ordentlichen Strahl und einen ersten außerordentlichen Strahl aufgespalten wird. Im Strahlengang hinter dem Savart-Element ist der Analysator angeordnet und im Strahlengang hinter dem Analysator ist die Detektionseinheit angeordnet. Die Detektionseinheit nimmt im Abbildungsmodus eine Abbildung eines zu untersuchenden Objekts und im Spektrometermodus ein Interferogramm des zu untersuchenden Objekts auf. Aus dem Interferogramm können spektrale Informationen gewonnen werden, die das zu untersuchende Objekt betreffen.

In einer weiteren Ausführungsform ist im Strahlengang zwischen dem ersten doppelbrechenden Element und dem zweiten doppelbrechenden Element ein zweites Flüssigkristallelement angeordnet. Das zweite Flüssigkristallelement ist dazu ausgelegt, eine sechste Polarisationsachse einer aus dem zweiten Flüssigkristallelement austretenden Strahlung derart einzustellen, dass die aus dem zweiten Flüssigkristallelement austretende Strahlung im Abbildungsmodus das zweite doppelbrechende Element ohne Aufspaltung durchläuft und dass im Spektrometermodus der erste ordentliche Strahl als ein zweiter außerordentlicher Strahl in das zweite doppelbrechende Element eintritt und der erste außerordentliche Strahl als ein zweiter ordentlicher Strahl in das zweite doppelbrechende Element eintritt. Ein Vorteil ist, dass mit dieser Ausführungsform das von der Detektionseinheit aufgenommene Interferogramm in einem größeren Winkelbereich ausgewertet werden kann. Ein weiterer Vorteil dieser Ausführungsform gegenüber einer Ausführungsform ohne zweites Flüssigkristallelement ist es, dass die von der Detektionseinheit aufgenommene Abbildung bzw. das von der Detektionseinheit aufgenommene Interferogramm eines zu untersuchenden Objekts keine Verschiebung aufweist.

Alternativ oder ergänzend wird im Strahlengang zwischen dem zweiten doppelbrechenden Element und dem Analysator ein drittes Flüssigkristallelement angeordnet, welches dazu ausgelegt ist eine achte Polarisationsachse einer aus dem dritten Flüssigkristallelement austretenden Strahlung derart einzustellen, dass die achte Polarisationsachse im Abbildungsmodus parallel zu einer neunten Polarisationsachse des Analysators ist. Dadurch werden im Abbildungsmodus vorteilhafterweise Verluste der aus dem zweiten Element austretenden Strahlung beim Passieren des Analysators verringert.

In einer alternativen oder ergänzenden Ausführungsform wird im Strahlgang vor der optischen Einheit ein Diffusor angeordnet. Dies hat im Spektrometermodus den Vorteil, dass das von der Detektionseinheit detektierte Messergebnis in einem großen Bereich unabhängig vom Einfallswinkel des Lichts und vom Abstand zwischen Miniaturspektrometer und zu untersuchendem Objekt ist. Des Weiteren bewirkt der Diffusor eine Homogenisierung der räumlichen Bildinformation. Das Homogenisieren der räumlichen Bildinformation bewirkt vorteilhafterweise im Spektrometermodus, dass in von der Detektionseinheit aufgenommenen Daten nur die spektrale Information vorliegt und kein komplexes Hintergrundsignal mitberücksichtigt werden muss. Dies steigert die Genauigkeit der spektrometrischen Messung. Insbesondere kann der Diffusor im Spektrometermodus mechanisch per Hand oder motorisiert in den Strahlengang vor dem Polarisator eingebracht werden und im Abbildungsmodus wieder aus dem Strahlengang herausbewegt werden. Dadurch ergibt sich eine Verbesserung der Qualität der Messergebnisse im Spektrometermodus ohne Einbußen der Qualität bei der Bilderfassung im Abbildungsmodus.

Der Diffusor kann in einer weiteren Ausführungsform einen schaltbaren Diffusor umfassen. Der schaltbare Diffusor ist zwischen einem für eine von einem zu untersuchenden Objekt einfallende Strahlung transparenten Zustand und einem für die vom zu untersuchenden Objekt einfallende Strahlung opaken Zustand schaltbar. Ausführungsformen eines schaltbaren Diffusors umfassen beispielsweise gelöste Partikel in einem Polymer-Flüssigkristall-Film die opak sind, da die Moleküle z.B. Mizellen bilden und bei Anlegen einer Spannung transparent werden, wenn die Moleküle sich strecken. In einer weiteren Ausführungsform eines schaltbaren Diffusors umfasst dieser Mikrojalousien, also Mikrolamellen, die auf einem transparenten Substrat vorliegen, die ohne Spannung aufgerollt sind, sodass die Fläche transparent ist und sich bei Anlegen einer Spannung entrollen und die Fläche opak werden lassen (Oberbegriff 'intelligentes Glas' oder 'Smart glass'). Vorteilhaft ist, dass durch die Verwendung eines schaltbaren Diffusors keine mechanischen Bauteile benötigt werden. Dadurch wird ein kompakterer Aufbau und damit eine weitere Miniaturisierung eines erfindungsgemäßen Miniaturspektrometers gegenüber einer Ausführungsform mit einem nicht-schaltbaren Diffusor ermöglicht, wobei die Vorteile bezüglich der Qualität der Messergebnisse sowohl im Abbildungsmodus als auch im Spektrometermodus einer Ausführungsform von einem nicht-schaltbaren Diffusor erhalten bleiben.

Alternativ oder ergänzend kann im Strahlengang vor der optischen Einheit oder dem Diffusor, je nach gewählter Ausführungsform eine Unendlich-Optik, angeordnet werden. Die Unendlich-Optik kann vorteilhafterweise auf den jeweiligen Abbildungsfall abgestimmt werden, beispielsweise ein Mikroskop-, Makro-, Tele- oder Zoomobjektiv.

In einer weiteren vorteilhaften Ausführungsform umfasst das erfindungsgemäße Miniaturspektrometer eine Lichtquelle zur Beleuchtung oder Durchleuchtung eines zu untersuchenden Objekts. Durch Beleuchtung oder Durchleuchtung des zu untersuchenden Objekts mit der Lichtquelle wird vorteilhafterweise die Intensität des vom zu untersuchenden Objekt reflektierten bzw. transmittierten Lichts erhöht und damit das Messergebnis verbessert bzw. eine ausreichend detaillierte Messung erst ermöglicht. Zudem wird durch die Lichtquelle die Verwendung von vom Umgebungslicht unabhängigen Wellenlängen und spektralen Intensitäten ermöglicht. So können im Spektrometermodus auch Spektren in Frequenzbereichen angeregt werden, die durch das Umgebungslicht nicht oder nur unzureichend abgedeckt sind, wie ultraviolettes oder infrarotes Licht. Des Weiteren kann durch Modulation der Lichtquelle eine Selektion der durch diese Lichtquelle angeregten, absorbierten oder transmittieren Strahlung erfolgen. So wird das vom Objekt ausgehende gemessene Spektrum nicht durch spektrale Anteile von Umgebungsstrahlung verfälscht und ermöglicht auch Messungen in nicht abgedunkelten Räumen. Dies ist insbesondere im alltäglichen Gebrauch außerhalb einer kontrollierten Laborumgebung und somit für den Einsatz in Gütern des alltäglichen Gebrauchs unverzichtbar. Auch kann durch eine solche Lichtquelle selektiv ein bestimmter Bereich beleuchtet werden, was insbesondere bei ausgedehnten Proben mit einer inhomogenen Beschaffenheit von Vorteil ist.

Ein erfindungsgemäßes Verfahren zum Betreiben eines erfindungsgemäßen Miniaturspektrometers, wobei das Miniaturspektrometer dazu ausgelegt ist im Abbildungsmodus oder im Spektrometermodus betrieben zu werden, umfasst einen Umschaltmodus mittels dessen zwischen Abbildungsmodus und Spektrometermodus geschaltet werden kann, wobei der Umschaltmodus ein erstes Umschalten des mindestens einen Flüssigkristallelements vom Abbildungsmodus in den Spektrometermodus und ein zweites Umschalten des mindestens einen Flüssigkristallelements vom Spektrometermodus in den Abbildungsmodus umfasst. Ein Vorteil ist, dass durch den Umschaltmodus sowohl ein Betreiben des Miniaturspektrometers im Abbildungsmodus, als auch im Spektrometermodus möglich ist, wobei für das Umschalten nicht zwingend mechanischen Elemente benötigt werden. Dies ermöglicht es ein erfindungsgemäßes Miniaturspektrometer für verschiedene Anwendungen einzusetzen, insbesondere zur Bilderfassung und zur Spektrometrie, wobei sich die Messergebnisse der verschiedenen Anwendungen durch eine vergleichsweise hohe Qualität und Genauigkeit auszeichnen. Ein weiterer Vorteil ist, dass der Abbildungsmodus zu einem Anvisieren des zu untersuchenden Objekts, welches spektroskopiert werden soll, geeignet ist. Dies ist insbesondere von Vorteil, wenn das zu untersuchende Objekt inhomogen ist bzw. nur eine bestimmte Region des zu untersuchenden Objekts im Spektrometermodus untersucht werden soll.

Ein erfindungsgemäßes Verfahren bei der Verwendung eines erfindungsgemäßen Miniaturspektrometers mit schaltbarem Diffusor zeichnet sich zudem dadurch aus, dass beim ersten Umschalten der schaltbare Diffusor vom transparenten Zustand in den opaken Zustand geschaltet und beim zweiten Umschalten der schaltbare Diffusor vom opaken Zustand in den transparenten Zustand geschaltet wird. Dadurch kann vorteilhafterweise die Qualität und die Genauigkeit der Messergebnisse im Spektrometermodus weiter verbessert werden.

### Kurze Beschreibung der Zeichnungen

Ausführungsbeispiele der Erfindung sind in den Zeichnungen dargestellt und werden in der nachfolgenden Beschreibung näher erläutert. Gleiche Bezugszeichen in den Figuren bezeichnen gleiche oder gleich wirkende Elemente.

Es zeigen
Fig. 1 eine explodierte Ansicht eines erfindungsgemäßen Miniaturspektrometers beim Betrieb im Abbildungsmodus,
Fig. 2 eine explodierte Ansicht eines erfindungsgemäßen Miniaturspektrometers beim Betrieb im Spektrometermodus,
Fig. 3 eine explodierte Ansicht eines erfindungsgemäßen Miniaturspektrometers beim Betrieb im Abbildungsmodus,
Fig. 4 eine explodierte Ansicht eines erfindungsgemäßen Miniaturspektrometers beim Betrieb im Spektrometermodus und
Fig. 5 ein Ablauf-Diagramm, das ein Verfahren zum Umschalten zwischen Abbildungsmodus und Spektrometermodus zeigt.

### Ausführungsformen der Erfindung

Ein erfindungsgemäßes Miniaturspektrometer bezeichnet ein Spektrometer mit Abmessungen im Zentimeterbereich, wobei auch geringere Abmessungen unterhalb des Zentimeterbereichs eingeschlossen sind. Ein Strahlengang bezeichnet den geometrischen Verlauf von auf ein optisches Gerät oder optisches System auftreffender Strahlung durch das optische Gerät bzw. das optische System. Im vorliegenden Fall ist das optische Gerät ein erfindungsgemäßes Miniaturspektrometer.

Ein Flüssigkristallelement umfasst eine Substanz, die Kristalle enthält, deren Orientierung sich durch ein elektrisches Feld verändern lassen. Flüssigkristallelemente sind somit elektrooptisch schaltbar. Durch die Änderung der Orientierung der Kristalle kann der Winkel zum Drehen einer Polarisationsachse von auf das Flüssigkristallelement auftreffender Strahlung elektrisch eingestellt werden. Flüssigkristallelemente sind somit dazu geeignet die Polarisationsachse einzustellen und zu verändern. Zum Einstellen einer Polarisationsachse kann ein einstellbares elektrisches Feld an das Flüssigkristallelement angelegt werden. Ein Flüssigkristallelement eines erfindungsgemäßen Miniaturspektrometers wird mittels einer Schalteinheit, welche dazu ausgebildet ist ein einstellbares elektrisches Feld an die Substanz des Flüssigkristallelements anzulegen, eingestellt. Die Schalteinheit kann beispielsweise durch eine erste und eine zweite Elektrode gebildet werden, die von der Substanz beabstandet an der Substanz angeordnet sind. Durch Anlegen einer einstellbaren Spannung an die Elektroden kann ein einstellbares elektrisches Feld an die Substanz angelegt werden, sodass die Polarisationsachse der auf das Flüssigkristallelement auftreffenden Strahlung einstellbar ist.

Ein erfindungsgemäßes Miniaturspektrometer kann in einem Abbildungsmodus 700 oder in einem Spektrometermodus 701 betrieben werden. Im Abbildungsmodus 700 wird eine Abbildung eines zu untersuchenden Objekts aufgenommen. Der Abbildungsmodus 700 kann ausgewählt werden, um eine Bild des zu untersuchenden Objekts aufzunehmen oder um das zu untersuchende Objekt, welches im Spektrometermodus 701 spektral untersucht werden soll, aus einer Umgebung auszuwählen. Der Spektrometermodus 701 ist ein Modus, in dem spektrale Informationen über das zu untersuchende Objekt gewonnen und/oder analysiert werden können.

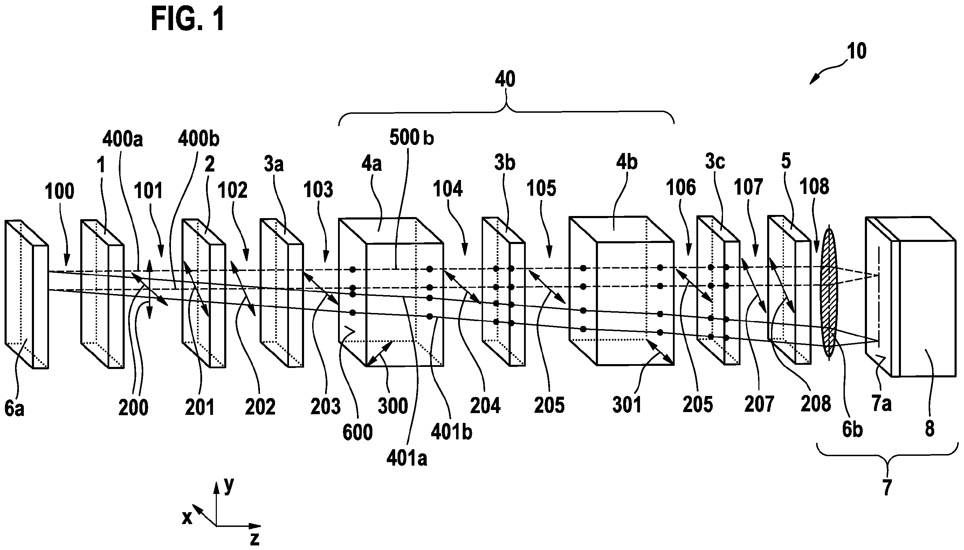

Fig. 1 zeigt ein erfindungsgemäßes Miniaturspektrometer 10 im Abbildungsmodus 700. Zur Verbesserung der Übersichtlichkeit ist das erfindungsgemäße Miniaturspektrometer in Fig. 1 in einer explodierten Ansicht dargestellt. Ein zu untersuchendes Objekt ist nicht dargestellt. Das in Fig. 1 dargestellte Miniaturspektrometer 10 umfasst mehrere Elemente, die im Strahlengang entlang einer Richtung parallel zur z-Achse hintereinander angeordnet sind: eine Unendlich-Optik 6a, die optional im Strahlengang angeordnet werden kann, einen Diffusor 1, einen Polarisator 2, ein erstes Flüssigkristallelement 3a, ein erstes doppelbrechendes Element 4a, ein zweites Flüssigkristallelement 3b, ein zweites doppelbrechendes Element 4b, ein drittes Flüssigkristallelement 3c, einen Analysator 5, eine Fokussieroptik 6b, eine strahlungssensitive Oberfläche 7a und eine Auswerteeinheit 8. Das zu untersuchende Objekt wird im Strahlengang vor dem Diffusor 1 bzw. vor der optionalen Unendlich-Optik 6a angeordnet. Das erste doppelbrechende Element 4a und das zweite doppelbrechende Element 4b bilden in diesem Ausführungsbeispiel zusammen mit dem zweiten Flüssigkristallelement 3b ein Savart-Element 40. Der Polarisator 2, das erste Flüssigkristallelement 3a, das Savart-Element 40, das dritte Flüssigkristallelement 3c und der Analysator 5 bilden in diesem Ausführungsbeispiel eine optische Einheit. Die Fokussieroptik 6b, die strahlungssensitive Oberfläche 7a und die Auswerteeinheit 8 bilden in diesem Ausführungsbeispiel die Detektionseinheit 7. Polarisationsachsen sind als Doppelpfeile an den Strahlen im Strahlengang eingetragen Vom zu untersuchenden Objekt einfallende Strahlung 100 trifft auf den Diffusor 1 auf. Der Diffusor 1 ist in diesem Ausführungsbeispiel ein schaltbarer Diffusor 1. Der schaltbare Diffusor 1 ist zwischen einem für die vom zu untersuchenden Objekt einfallende Strahlung 100 transparenten Zustand und einem für die vom zu untersuchenden Objekt einfallende Strahlung 100 opaken Zustand schaltbar. Im Abbildungsmodus 700 ist der Diffusor 1 im transparenten Zustand, das heißt die vom zu untersuchenden Objekt einfallende Strahlung 100 kann den Diffusor 1 ohne Änderung der Winkelverteilung passieren. Der Diffusor 1 wirkt im transparenten Zustand so, als sei kein Diffusor 1 im Strahlengang angeordnet. Aus dem Diffusor austretende Strahlung 101 weist keine ausgezeichnete erste Polarisationsachse 200 auf. Die aus dem Diffusor austretende Strahlung 101 ist unpolarisiert. Dies ist durch die beiden in verschiedene Richtungen zeigenden Pfeile im Strahlengang zwischen dem Diffusor 1 und dem Polarisator 2 angedeutet. In einer Ausführungsvariante umfasst der schaltbare Diffusor 1 einen Polymer Dispersed Liquid Crystal (PDLC). Ein PDLC ist ein Element mit mikroskopischen, optisch anisotropen Flüssigkristalltropfen, die in einer immobilen Polymermatrix eingebettet sind. Diese sind zufällig orientiert und stellen optische Streuzentren dar. Wird ein elektrisches Feld an den PDLC angelegt, so richten sich die Flüssigkristalltropfen aus, wodurch das gesamte Material transparent wird. Somit ist der PDLC ein elektronisch schaltbarer, optischer Diffusor 1. Der schaltbare Diffusor 1 wird über eine Schalteinheit eingestellt, die dazu ausgelegt ist den PDLC elektronisch zu schalten.

Die aus dem Diffusor austretende Strahlung 101 trifft auf den Polarisator 2 auf. Der Polarisator 2 polarisiert die aus dem Diffusor austretende Strahlung 101 in Richtung einer zweiten Polarisationsachse 201. Die zweite Polarisationsachse 201 liegt in einer Ebene parallel zur x-y-Ebene und weist zur x-z-Ebene und zur y-z-Ebene jeweils einen Winkel von 45° auf.

Die so polarisierte Strahlung trifft als erste einfallende Strahlung 102 auf das erste Flüssigkristallelement 3a auf. Das erste Flüssigkristallelement 3a ist so eingestellt, dass die dritte Polarisationsachse 202 beim Passieren des ersten Flüssigkristallelement 3a um 45° gedreht wird. Die vierte Polarisationsachse 203 der aus dem ersten Flüssigkristallelement austretenden Strahlung 103 ist nun parallel zur x-Achse. In einer Variante wird das erste Flüssigkristallelement 3a als eine Matrix aus modifizierten Schadt-Helfrich Zellen ausgeführt, die so geschaltet sind, dass ihre Wirkung der zuvor beschriebenen Wirkung des ersten Flüssigkristallelements 3a entspricht.

Die aus dem ersten Flüssigkristallelement austretende Strahlung 103 trifft auf das erste doppelbrechende Element 4a auf. Die erste optische Achse 300 des ersten doppelbrechenden Elements 4a liegt in einer Ebene parallel zur y-z-Ebene. Ein Hauptschnitt eines doppelbrechenden Elements 4a, 4b wird durch die Ebene beschrieben, die senkrecht zur Eintrittsfläche 600 ist und die optische Achse 300, 301 enthält. Die vierte Polarisationsachse 203 der aus dem ersten Flüssigkristallelement austretenden Strahlung 103 steht somit senkrecht zum Hauptschnitt des ersten doppelbrechenden Elements 4a und passiert daher das erste doppelbrechende Element 4a ohne Aufspaltung als erster ordentlicher Strahl 500b, der entsprechend dem Snellius'schen Brechungsgesetz gebrochen wird. In Fig. 1 ist ein geometrischer Verlauf der Strahlen im Miniaturspektrometer 10 exemplarisch für vier Strahlen 400a, 400b, 401a, 401b skizziert. Ein erster Strahl 400a und ein zweiter Strahl 400b verlaufen parallel zueinander und treffen an verschiedenen Orten senkrecht auf der Eintrittsfläche 600 auf. Da beide Strahlen 400a, 400b das erste doppelbrechende Element 4a jeweils als ordentlicher Strahl passieren, werden sie nicht abgelenkt. Ein dritter Strahl 401a und ein vierter Strahl 401b verlaufen ebenfalls parallel zueinander, allerdings treffen sie unter einem anderen Winkel als der erste Strahl 400a und der zweite Strahl 400b auf der Eintrittsfläche 600 auf. Da der dritte und der vierte Strahl 401a, 401b das erste doppelbrechende Element 4a jeweils als ordentlicher Strahl passieren, werden sie unter einem durch das Snellius'schen Brechungsgesetz bestimmten Winkel abgelenkt. Die Punkte, an denen die Strahlen in das erste doppelbrechende Element 4a eintreten und an denen sie austreten sind jeweils durch einen schwarzen Punkt markiert.

Die aus dem ersten doppelbrechenden Element austretende Strahlung 104 trifft auf das zweite Flüssigkristallelement 3b. Das zweite Flüssigkristallelement 3b ist so eingestellt, dass die fünfte Polarisationsachse 204 beim Passieren des zweiten Flüssigkristallelement 3b nicht verändert wird. Eine sechste Polarisationsachse 205 der aus dem zweiten Flüssigkristallelement austretenden Strahlung 105 stimmt somit mit der fünften Polarisationsachse 204 überein.

Die aus dem zweiten Flüssigkristallelement austretende Strahlung 105 trifft auf das zweite doppelbrechende Element 4b. Die sechste Polarisationsachse 205 ist senkrecht zum Hauptschnitt des zweiten doppelbrechenden Element 4b, dessen zweite optische Achse 301 in Fig. 1 eingezeichnet ist. Somit durchlaufen die Strahlen 400a, 400b, 401a, 401b unaufgespalten das zweite doppelbrechende Element 4b als ordentliche Strahlen, wie dies im Zusammenhang mit dem ersten doppelbrechenden Element 4a vorstehend beschrieben ist.

Die aus dem zweiten doppelbrechenden Element austretende Strahlung 106 trifft auf das dritte Flüssigkristallelement 3c auf. Das dritte Flüssigkristallelement 3c ist so eingestellt, dass eine achte Polarisationsachse 207 der aus dem dritten Flüssigkristallelement austretenden Strahlung 107 parallel zu einer neunten Polarisationsachse 208 des Analysators 5 einstellt. Der Analysator 5 polarisiert die aus dem dritten Flüssigkristallelement austretende Strahlung 107 in Richtung der neunten Polarisationsachse 208. Die neunte Polarisationsachse 208 liegt in einer Ebene parallel zur x-y-Ebene und weist zur x-z-Ebene und zur y-z-Ebene jeweils einen Winkel von 45° auf.

Die aus dem Analysator austretende Strahlung 108 trifft auf eine Fokussieroptik 6b. Die Fokussieroptik ist in diesem Ausführungsbeispiel eine Linse 6b. Alternativ kann die Fokussieroptik 6b mindestens eines der folgenden Elemente umfassen: refraktives Element, diffraktives Element, holografisch-optisches Element oder reflektives Element. Alternativ kann die Fokussieroptik 6b der Optik in einer Smartphone Kamera entsprechen. Die Linse 6b in Fig. 1 ist als Sammellinse ausgebildet. Eine Sammellinse zeichnet sich dadurch aus, dass parallele Strahlen, die auf die Linse 6b auftreffen, sich in der Brennebene der Linse 6b schneiden.

Im Strahlengang hinter der Linse 6b ist in der Brennebene der Linse 6b die strahlungssensitive Oberfläche 7a angeordnet. Die strahlungssensitive Oberfläche 7a dient der Detektion einer Strahlung. Eine optische Größe, die von der Detektionseinheit 7 erfasst wird, ist beispielsweise eine Intensität der Strahlung. In diesem Ausführungsbeispiel wird die strahlungssensitive Oberfläche 7a durch eine zweidimensionale Anordnung einzelner Strahlungssensoren, einer sogenannten zweidimensionalen Sensormatrix, in der Brennebene der Linse 6b realisiert. Die strahlungssensitive Oberfläche 7a ist mit der Auswerteeinheit 8 verbunden.

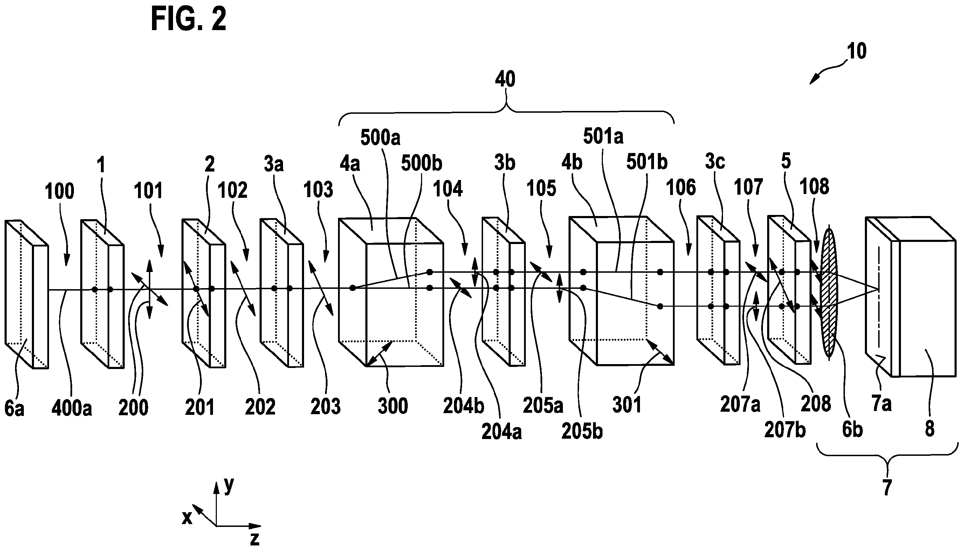

In Fig. 2 ist das in Fig. 1 abgebildete Miniaturspektrometer 10 im Spektrometermodus 701 dargestellt. Der Aufbau des Miniaturspektrometers 10 ist der gleiche wie in Fig. 1. Ein Unterschied zwischen dem in Fig. 1 und dem in Fig. 2 dargestellten Miniaturspektrometer 10 besteht darin, dass das erste Flüssigkristallelement 3a, das zweite Flüssigkristallelement 3b, das dritte Flüssigkristallelement 3c und der schaltbare Diffusor 1 in Fig. 1 eine andere Einstellung aufweisen als in Fig. 2. Ein Umschalten zwischen dem Abbildungsmodus 700 und dem Spektrometermodus 701 erfolgt in einem Umschaltmodus über eine Änderung der Einstellungen der Flüssigkristallelemente 3a, 3b, 3c und des schaltbaren Diffusors 1. Der schaltbare Diffusor 1 ist im Spektrometermodus 701 in den opaken Zustand geschaltet, wie dies vorstehend beschrieben ist. Das heißt, dass der schaltbare Diffusor 1 als Diffusor wirkt. Die Winkelabhängigkeit der Intensität der aus dem Diffusor austretenden Strahlung 101, weist eine definierte Form auf und ist unabhängig von der Winkel- und Intensitätsverteilung der vom zu untersuchenden Objekt einfallenden Strahlung 100. In Fig. 2 ist der Verlauf der Strahlung durch das Miniaturspektrometer exemplarisch für den ersten Strahl 400a gezeigt. Der Verlauf stimmt bis zum ersten Flüssigkristallelement 3a mit der Beschreibung in Fig. 1 überein.

Die erste einfallende Strahlung 102 trifft auf das erste Flüssigkristallelement 3a auf. Das erste Flüssigkristallelement 3a ist so eingestellt, dass die dritte Polarisationsachse 202 beim Passieren des ersten Flüssigkristallelement 3a nicht gedreht wird. Die vierte Polarisationsachse 203 der aus dem ersten Flüssigkristallelement austretenden Strahlung 103 stimmt somit mit der dritten Polarisationsachse 202 überein. In einer Variante wird das erste Flüssigkristallelement 3a als eine Matrix aus modifizierten Schadt-Helfrich Zellen ausgeführt, die so geschaltet sind, dass ihre Wirkung der zuvor beschriebenen Wirkung des ersten Flüssigkristallelements 3a entspricht.

Die aus dem ersten Flüssigkristallelement austretende Strahlung 103 trifft auf das erste doppelbrechende Element 4a. Die erste optische Achse 300 ist in Fig. 2 eingezeichnet. Die erste optische Achse 300 des ersten doppelbrechenden Elements 4a liegt wie in Fig. 1 in einer Ebene parallel zur y-z-Ebene. Die aus dem ersten Flüssigkristallelement austretende Strahlung 103 wird im ersten doppelbrechenden Element 4a in einen ersten ordentlichen Strahl 500b und einen ersten außerordentlichen Strahl 500a aufgespalten. Bei der Doppelbrechung wird die eintreffende Strahlung in zwei zueinander senkrecht polarisierte Komponenten 204a, 204b aufgespalten. Zum einen in den ersten ordentlichen Strahl 500b, dessen elektrisches Feld senkrecht auf dem Hauptschnitt steht, zum anderen in den ersten außerordentlichen Strahl 500a, dessen elektrisches Feld im Hauptschnitt des ersten doppelbrechenden Elements 4a schwingt. Die aus dem ersten doppelbrechenden Element austretende Strahlung 104 weist somit zwei unterschiedliche Polarisationsachsen 204a, 204b auf. Der erste außerordentliche Strahl 500a weist eine fünfte Polarisationsachse des außerordentlichen Strahls 204a auf und der erste ordentliche Strahl 500b weist eine fünfte Polarisationsachse des ordentlichen Strahls 204b auf.

Die aus dem ersten doppelbrechenden Element austretende Strahlung 104 trifft auf das zweite Flüssigkristallelement 3b. Das zweite Flüssigkristallelement 3b ist so eingestellt, dass die fünften Polarisationsachsen 204a, 204b beim Passieren des zweiten Flüssigkristallelement 3b um jeweils 90° gedreht werden. Dies ist in Fig. 2 durch die Doppelpfeile an den Strahlen 500a, 500b angedeutet. Die sechste Polarisationsachse des außerordentlichen Strahls 205a der aus dem zweiten Flüssigkristallelement austretenden Strahlung 105 ist nun parallel zur x-Achse. Die sechste Polarisationsachse des ordentlichen Strahls 205b der aus dem zweiten Flüssigkristallelement austretenden Strahlung 105 ist nun parallel zur y-Achse.

Die aus dem zweiten Flüssigkristallelement austretende Strahlung 105 trifft nun auf dem zweiten doppelbrechenden Element 4b auf. Der erste ordentliche Strahl 500b passiert als ein zweiter außerordentlicher Strahl 501b das zweite doppelbrechende Element 4b und der erste außerordentliche Strahl 500a passiert als ein zweiter ordentlicher Strahl 501a das zweite doppelbrechende Element 4b. Nach Austritt aus dem zweiten doppelbrechenden Element 4b verlaufen die Strahlen 501a, 501b parallel zueinander.

Die aus dem zweiten doppelbrechenden Element 4b austretende Strahlung 106 passiert das dritte Flüssigkristallelement 3c. Dieses ist so eingestellt, dass die sechsten Polarisationsachsen 205a, 205b nicht gedreht werden. Somit stimmt die sechste Polarisationsachse des außerordentlichen Strahls 205a mit der achten Polarisationsachse des zweiten ordentlichen Strahls 207a überein und die sechste Polarisationsachse des ordentlichen Strahls 205b stimmt mit der achten Polarisationsachse des zweiten außerordentlichen Strahls 207b überein.

Die aus dem dritten Flüssigkristallelement austretende Strahlung 107 trifft auf den Analysator 5. Der Analysator 5 polarisiert die aus dem dritten Flüssigkristallelement austretende Strahlung 107 in Richtung der neunten Polarisationsachse 208. Die neunte Polarisationsachse 208 liegt in einer Ebene parallel zur x-y-Ebene und weist zur x-z-Ebene und zur y-z-Ebene jeweils einen Winkel von 45° auf, um eine Interferenz der beiden Strahlen 108 auf der strahlungssensitiven Oberfläche 7a zu ermöglichen. Der nachfolgende Verlauf ist der Beschreibung der Fig. 1 zu entnehmen.

Die sensitive Oberfläche 7a nimmt in Fig. 1 im Abbildungsmodus 700 ein Bild des zu untersuchenden Objekts auf. In Fig. 2 nimmt die sensitive Oberfläche 7a im Spektrometermodus 701 ein Interferogramm des zu untersuchenden Objekts auf.

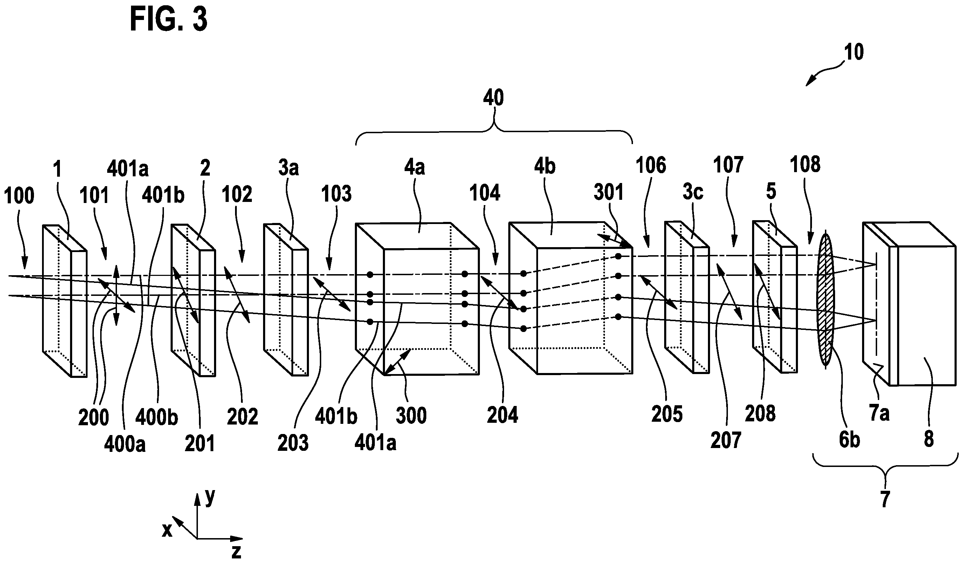

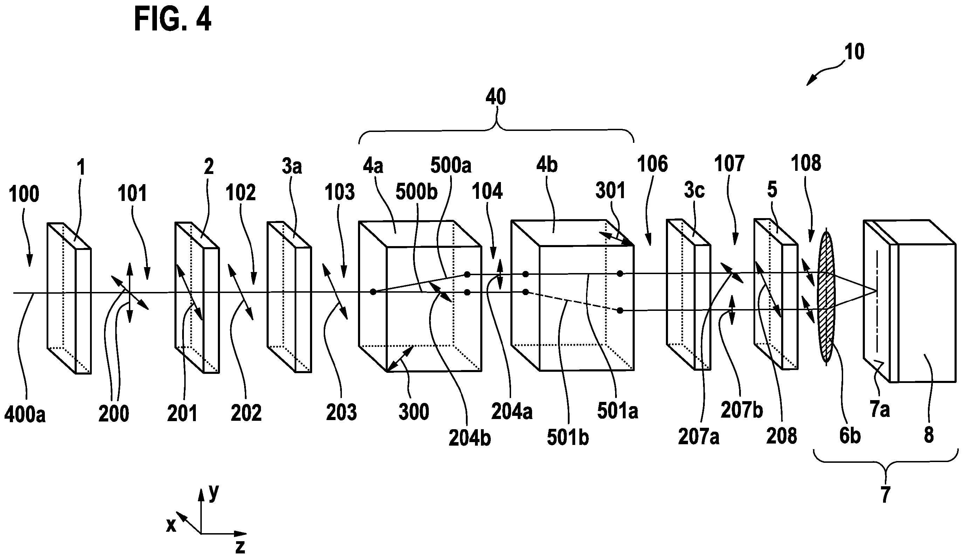

Fig. 3 und Fig.4 zeigen ein erfindungsgemäßes Miniaturspektrometer 10 jeweils im Abbildungsmodus 700 (Fig. 3) und im Spektrometermodus 701 (Fig. 4). Das in Fig. 3 und Fig. 4 dargestellte Miniaturspektrometer 10 unterscheidet sich von dem in Fig. 1 und Fig.2 dargestellten Miniaturspektrometer 10 dahingehend, dass das in Fig. 3 und Fig. 4 dargestellte Miniaturspektrometer 10 kein zweites Flüssigkristallelement 3b aufweist. Das Savart-Element 40 umfasst in den in Fig. 3 und Fig. 4 gezeigten Ausführungsbeispielen nur das erste doppelbrechende Element 4a und das zweite doppelbrechende Element 4b. Zudem liegt die zweite optische Achse 301 des zweiten doppelbrechenden Elements in einer Ebene parallel zur x-z-Ebene.

Fig. 3 zeigt ein erfindungsgemäßes Miniaturspektrometer 10 im Abbildungsmodus 700. Der exemplarisch gezeigte Verlauf der Strahlen 400a, 400b, 401a, 401b und der Verlauf der Strahlung ist bis zum Austritt aus dem ersten doppelbrechenden Element 4a analog zu der Beschreibung der Fig. 1, wobei die Strahlung 100 in diesem Ausführungsbeispiel direkt vom zu untersuchenden Objekt kommt. Die aus dem ersten doppelbrechenden Element austretende Strahlung 104 trifft auf das zweite doppelbrechende Element 4b auf. Die aus dem ersten doppelbrechenden Element austretende Strahlung 104 passiert das zweite doppelbrechende Element 4b als außerordentliche Strahlen ohne Aufspaltung in ordentlichen und außerordentlichen Strahl. Dadurch, dass alle Strahlen das zweite doppelbrechende Element 4b als außerordentliche Strahlen passieren, ist auf der sensitiven Oberfläche 7a eine laterale Verschiebung des Bildes gegenüber dem mit dem in Fig. 1 gezeigten Miniaturspektrometer 10 aufgenommenen Bild zu beobachten. Im zweiten doppelbrechenden Element 4b sind die außerordentlichen Strahlen gestrichelt eingezeichnet, da sie eine Komponente in die Zeichenebene hinein aufweisen. Dies ist auch durch die Position der Austrittspunkte angedeutet. Der weitere Verlauf ist analog zu der Beschreibung zu Fig. 1.

Fig. 4 zeigt das in Fig. 3 gezeigte Miniaturspektrometer 10 im Spektrometermodus 701. Bis zum Austritt aus dem ersten doppelbrechenden Element 4a stimmt die Beschreibung mit der Beschreibung der Fig. 2 überein. Die aus dem ersten doppelbrechenden Element austretende Strahlung 104 trifft auf das zweite doppelbrechende Element 4b auf. Der erste ordentliche Strahl 500b passiert das zweite doppelbrechende Element 4b als zweiter außerordentlicher Strahl 501b. Der erste außerordentlicher Strahl 500a passiert das zweite doppelbrechende Element 4b als zweiter ordentlicher Strahl 501a.. Der weitere Verlauf ist analog zur Beschreibung zu Fig. 2.

In einer Variante der vorstehend beschriebenen Ausführungsbeispiele wird kein drittes Flüssigkristallelement 3c im Strahlengang angeordnet. Die aus dem zweiten doppelbrechenden Element 4b austretende Strahlung 106 tritt nach Verlassen des zweiten doppelbrechenden Elements 4b direkt auf den Analysator 5. Dessen neunte Polarisationsachse 208 liegt ebenfalls in einer Ebene parallel zur x-y-Ebene und weist zur x-z-Ebene und zur y-z-Ebene jeweils einen Winkel von 45° auf.

Alternativ zu einem schaltbaren Diffusor 1 kann ein nicht-schaltbarer Diffusor mechanisch per Hand oder motorisiert im Spektrometermodus 701 in den Strahlengang eingebracht werden und im Abbildungsmodus 700 wieder herausbewegt werden.

Das zu untersuchende Objekt kann Strahlung reflektieren, emittieren oder transmittieren, die anschließend im Abbildungsmodus 700 und/oder Spektrometermodus 701 eines erfindungsgemäßen Miniaturspektrometer 10 verarbeitet wird. Im Fall der Reflexion und der Transmission wird bevorzugt ein erfindungsgemäßes Miniaturspektrometer 10, das eine Lichtquelle umfasst, verwendet. Das zu untersuchende Objekt wird von der Lichtquelle beleuchtet oder durchleuchtet.

Die vorstehend beschriebenen Ausführungsbeispiele sind aufgrund der besseren Übersichtlichkeit jeweils in einer explodierten Ansicht dargestellt. Bei einem bevorzugten tatsächlichen Aufbau sind der Diffusor 1, der Polarisator 2, die Flüssigkristallelemente 3a, 3b, 3c, die doppelbrechenden Elemente 4a, 4b und der Analysator 5 vorzugsweise in Kontakt zueinander angeordnet, sodass zwischen ihnen keine Lücken vorhanden sind.

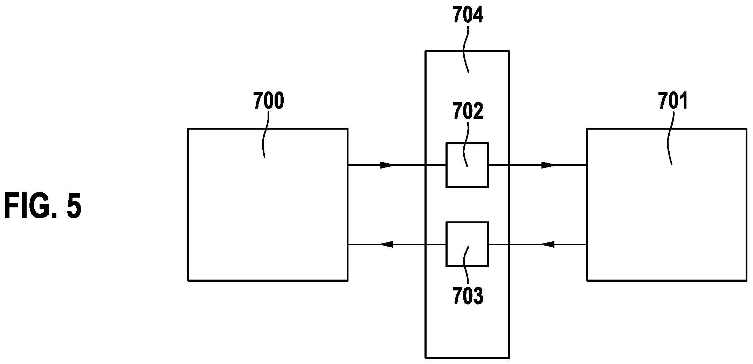

In Fig. 5 ist ein Ablauf-Diagramm für ein Verfahren zum Betreiben eines erfindungsgemäßen Miniaturspektrometers dargestellt. Ein erfindungsgemäßes Miniaturspektrometer ist dazu ausgelegt im Abbildungsmodus 700 oder im Spektrometermodus 701 betrieben zu werden. Über einen Umschaltmodus 704 wird ein erfindungsgemäßes Miniaturspektrometer zwischen Abbildungsmodus 700 und Spektrometermodus 701 geschaltet. Der Umschaltmodus 704 umfasst ein erstes Umschalten 702 des mindestens einen Flüssigkristallelements 3a, 3b, 3c vom Abbildungsmodus 700 in den Spektrometermodus 701 und ein zweites Umschalten 703 des mindestens einen Flüssigkristallelements 3a, 3b, 3c vom Spektrometermodus 701 in den Abbildungsmodus 700. Sofern ein schaltbarer Diffusor 1 verwendet wird, umfasst das erste Umschalten 702 zusätzlich, dass der schaltbare Diffusor 1 vom transparenten Zustand in den opaken Zustand geschaltet wird und das zweite Umschalten 703, dass der schaltbare Diffusor 1 vom opaken Zustand in den transparenten Zustand geschaltet wird. Ein Umschalten 702, 703 wird dadurch erreicht, dass elektrische Felder an den Flüssigkristallelementen 3a, 3b, 3c und an den schaltbaren Diffusor 1 angelegt werden, wie dies vorstehend beschrieben ist.

## Patentansprüche

1. Miniaturspektrometer (10) zur Spektrometrie und zur Bilderfassung, umfassend
- eine Detektionseinheit (7) zur Erfassung einer optischen Größe und
- eine optische Einheit, umfassend einen Polarisator (2), ein Savart-Element (40), welches ein erstes doppelbrechendes Element (4a) und ein zweites doppelbrechendes Element (4b) umfasst und einen Analysator (5),
**dadurch gekennzeichnet, dass**
- im Strahlengang zwischen dem Polarisator (2) und dem Savart-Element (40) ein erstes Flüssigkristallelement (3a) angeordnet ist, welches dazu ausgelegt ist, eine vierte Polarisationsachse (203) von einer aus dem ersten Flüssigkristallelement austretenden Strahlung (103) derart einzustellen, dass
• die aus dem ersten Flüssigkristallelement austretende Strahlung (103) in einem Abbildungsmodus (700) des Miniaturspektrometers (10) das erste doppelbrechende Element (4a) ohne Aufspaltung durchläuft und
• die aus dem ersten Flüssigkristallelement austretende Strahlung (103) in einem Spektrometermodus (701) des Miniaturspektrometers (10) im ersten doppelbrechenden Element (4a) in einen ersten ordentlichen Strahl (500b) und einen ersten außerordentlichen Strahl (500a) aufgespalten wird und
- wobei im Strahlengang hinter dem Savart-Element (40) der Analysator (5) angeordnet ist und
- im Strahlengang hinter dem Analysator (5) die Detektionseinheit (7) angeordnet ist.

2. Miniaturspektrometer (10) nach Anspruch 1, **dadurch gekennzeichnet, dass** im Strahlengang zwischen dem ersten doppelbrechenden Element (4a) und dem zweiten doppelbrechenden Element (4b) ein zweites Flüssigkristallelement (3b) angeordnet ist, welches dazu ausgelegt ist, eine sechste Polarisationsachse (205, 205a, 205b) einer aus dem zweiten Flüssigkristallelement austretenden Strahlung (105) derart einzustellen, dass
- die aus dem zweiten Flüssigkristallelement austretende Strahlung (105) im Abbildungsmodus (700) das zweite doppelbrechende Element (4b) ohne Aufspaltung durchläuft und
- im Spektrometermodus (701) der erste ordentliche Strahl (500b) als ein zweiter außerordentlicher Strahl (501b) in das zweite doppelbrechende Element (4b) eintritt und der erste außerordentliche Strahl (500a) als ein zweiter ordentlicher Strahl (501a) in das zweite doppelbrechende Element (4b) eintritt.

3. Miniaturspektrometer (10) nach einem der vorhergehenden Ansprüche, **dadurch gekennzeichnet, dass** im Strahlengang zwischen dem zweiten doppelbrechenden Element (4b) und dem Analysator (5) ein drittes Flüssigkristallelement (3c) angeordnet ist, welches dazu ausgelegt ist eine achte Polarisationsachse (207) einer aus dem dritten Flüssigkristallelement austretenden Strahlung (107) derart einzustellen, dass die achte Polarisationsachse (207) im Abbildungsmodus (700) parallel zu einer neunten Polarisationsachse (208) des Analysators ist.

4. Miniaturspektrometer (10) nach einem der vorhergehenden Ansprüche, **dadurch gekennzeichnet, dass** im Strahlgang vor der optischen Einheit ein Diffusor (1) angeordnet ist.

5. Miniaturspektrometer (10) nach Anspruch 4, **dadurch gekennzeichnet, dass** der Diffusor einen schaltbaren Diffusor (1) umfasst, wobei der schaltbare Diffusor (1) zwischen einem für eine von einem zu untersuchenden Objekt einfallende Strahlung (100) transparenten Zustand und einem für die vom zu untersuchenden Objekt einfallende Strahlung (100) opaken Zustand schaltbar ist.

6. Miniaturspektrometer (10) nach einem der vorhergehenden Ansprüche, **dadurch gekennzeichnet, dass** im Strahlengang vor der optischen Einheit oder vor dem Diffusor (1) eine Unendlich-Optik (6a) angeordnet ist.

7. Miniaturspektrometer (10) nach einem der vorhergehenden Ansprüche, **dadurch gekennzeichnet, dass** das Miniaturspektrometer (10) eine Lichtquelle zur Beleuchtung oder Durchleuchtung eines zu untersuchenden Objekts umfasst.

8. Verfahren zum Betreiben eines Miniaturspektrometers (10) nach einem der vorhergehenden Ansprüche, wobei das Miniaturspektrometer (10) dazu ausgelegt ist im Abbildungsmodus (700) oder im Spektrometermodus (701) betrieben zu werden und über einen Umschaltmodus (704) zwischen Abbildungsmodus (700) und Spektrometermodus (701) geschaltet wird, wobei der Umschaltmodus (704)
- ein erstes Umschalten (703) des mindestens einen Flüssigkristallelements (3a, 3b, 3c) vom Abbildungsmodus (700) in den Spektrometermodus (701) umfasst und
- ein zweites Umschalten (704) des mindestens einen Flüssigkristallelements (3a, 3b, 3c) vom Spektrometermodus (701) in den Abbildungsmodus (700) umfasst.

9. Verfahren nach Anspruch 8 zum Betreiben eines Miniaturspektrometers (10) nach Anspruch 5, **dadurch gekennzeichnet, dass** beim ersten Umschalten (703) der schaltbare Diffusor (1) vom transparenten Zustand in den opaken Zustand geschaltet wird und beim zweiten Umschalten (704) der schaltbare Diffusor (1) vom opaken Zustand in den transparenten Zustand geschaltet wird.

## Claims

1. Miniature spectrometer (10) for spectrometry and for image capture, comprising
- a detection unit (7) for capturing an optical variable and
- an optical unit comprising a polarizer (2), a Savart element (40), which comprises a first birefringent element (4a) and a second birefringent element (4b), and an analyser (5),
**characterized in that**
- a first liquid crystal element (3a) is disposed between the polarizer (2) and the Savart element (40) in the beam path, said first liquid crystal element being designed to set a fourth polarization axis (203) of radiation (103), emanating from the first liquid crystal element, in such a way that
• the radiation (103) emanating from the first liquid crystal element passes through the first birefringent element (4a) without splitting in an imaging mode (700) of the miniature spectrometer (10) and
• the radiation (103) emanating from the first liquid crystal element is split into a first ordinary ray (500b) and a first extraordinary ray (500a)in the first birefringent element (4a) in a spectrometer mode (701) of the miniature spectrometer (10) and
- wherein the analyser (5) is disposed downstream of the Savart element (40) in the beam path and
- the detection unit (7) is disposed downstream of the analyser (5) in the beam path.

2. Miniature spectrometer (10) according to Claim 1, **characterized in that** a second liquid crystal element (3b) is disposed between the first birefringent element (4a) and the second birefringent element (4b) in the beam path, said second liquid crystal element being designed to set a sixth polarization axis (205, 205a, 205b) of radiation (105), emanating from the second liquid crystal element, in such a way that
- the radiation (105) emanating from the second liquid crystal element passes through the second birefringent element (4b) without splitting in the imaging mode (700) and
- the first ordinary ray (500b) enters the second birefringent element (4b) as a second extraordinary ray (501b) and the first extraordinary ray (500a) enters the second birefringent element (4b) as a second ordinary ray (501a) in the spectrometer mode (701).

3. Miniature spectrometer (10) according to any one of the preceding claims, **characterized in that** a third liquid crystal element (3c) is disposed between the second birefringent element (4b) and the analyser (5) in the beam path, said third liquid crystal element being designed to set an eighth polarization axis (207) of radiation (107), emanating from the third liquid crystal element, in such a way that the eighth polarization axis (207) is parallel to a ninth polarization axis (208) of the analyser in the imaging mode (700).

4. Miniature spectrometer (10) according to any one of the preceding claims, **characterized in that** a diffuser (1) is disposed upstream of the optical unit in the beam path.

5. Miniature spectrometer (10) according to Claim 4, **characterized in that** the diffuser comprises a switchable diffuser (1), wherein the switchable diffuser (1) is switchable between a state that is transparent to radiation (100) incident from an object to be examined and a state that is opaque to radiation (100) incident from the object to be examined.

6. Miniature spectrometer (10) according to any one of the preceding claims, **characterized in that** an infinity optical unit (6a) is disposed upstream of the optical unit or upstream of the diffuser (1) in the beam path.

7. Miniature spectrometer (10) according to any one of the preceding claims, **characterized in that** the miniature spectrometer (10) comprises a light source for illuminating or trans-illuminating an object to be examined.

8. Method for operating a miniature spectrometer (10) according to any one of the preceding claims, wherein the miniature spectrometer (10) is designed to be operated in the imaging mode (700) or in the spectrometer mode (701) and switched by way of a switching mode (704) between imaging mode (700) and spectrometer mode (701), wherein the switching mode (704)
- comprises a first switching (703) of the at least one liquid crystal element (3a, 3b, 3c) from the imaging mode (700) to the spectrometer mode (701) and
- comprises a second switching (704) of the at least one liquid crystal element (3a, 3b, 3c) from the spectrometer mode (701) into the imaging mode (700).

9. Method according to Claim 8 for operating a miniature spectrometer (10) according to Claim 5, **characterized in that** the switchable diffuser (1) is switched from the transparent state to the opaque state during the first switching (703) and the switchable diffuser (1) is switched from the opaque state to the transparent state during the second switching (704).

## Revendications

1. Spectromètre miniature (10) destiné à la spectrométrie et à l'acquisition d'images, comprenant
- une unité de détection (7) destinée à détecter une grandeur optique et
- une unité optique comprenant un polariseur (2), un élément Savart (40), muni d'un premier élément biréfringent (4a) et d'un deuxième élément biréfringent (4b), et un analyseur (5),
**caractérisé en ce que**
- sur le trajet de rayons entre le polariseur (2) et l'élément Savart (40), est disposé un premier élément à cristaux liquides (3a) qui est conçu pour régler un quatrième axe de polarisation (203) d'un rayonnement (103) sortant du premier élément à cristaux liquides de manière à ce que
• dans un mode de formation d'image (700) du spectromètre miniature (10), le rayonnement (103) sortant du premier élément à cristaux liquides passe à travers le premier élément biréfringent (4a) sans être divisé, et
• dans un mode spectromètre (701) du spectromètre miniature (10), le rayonnement (103) sortant du premier élément à cristaux liquides est divisé dans le premier élément biréfringent (4a) en un premier rayon ordinaire (500b) et un premier rayon extraordinaire (500a), et
- dans lequel l'analyseur (5) est disposé en arrière de l'élément Savart (40) sur le trajet de rayons, et
- l'unité de détection (7) est disposée en arrière de l'analyseur (5) sur le trajet de rayons.

2. Spectromètre miniature (10) selon la revendication 1, **caractérisé en ce qu'**un deuxième élément à cristaux liquides (3b) est disposé sur le trajet de rayons entre le premier élément biréfringent (4a) et le deuxième élément biréfringent (4b) et est conçu pour régler un sixième axe de polarisation (205, 205a, 205b) d'un rayonnement sortant du deuxième élément à cristaux liquides (105) de manière à ce que
- dans le mode de formation d'image (700), le rayonnement (105) sortant du deuxième élément à cristaux liquides passe à travers le deuxième élément biréfringent (4b) sans être divisé et
- dans le mode spectromètre (701), le premier rayon ordinaire (500b) pénètre dans le deuxième élément biréfringent (4b) en tant que deuxième rayon extraordinaire (501b) et le premier rayon extraordinaire (500a) pénètre dans le deuxième élément biréfringent (4b) en tant que deuxième rayon ordinaire (501a).

3. Spectromètre miniature (10) selon l'une des revendications précédentes, **caractérisé en ce qu'**un troisième élément à cristaux liquides (3c) est disposé sur le trajet de rayons entre le deuxième élément biréfringent (4b) et l'analyseur (5) et est conçu pour régler un huitième axe de polarisation (207) d'un rayonnement (107) sortant du troisième élément à cristaux liquides de manière à ce que, dans le mode de formation d'image (700), le huitième axe de polarisation (207) soit parallèle à un neuvième axe de polarisation (208) de l'analyseur.

4. Spectromètre miniature (10) selon l'une des revendications précédentes, **caractérisé en ce qu'**un diffuseur (1) est disposé sur le trajet de rayons à l'avant de l'unité optique.

5. Spectromètre miniature (10) selon la revendication 4, **caractérisé en ce que** le diffuseur comprend un diffuseur commutable (1), dans lequel le diffuseur commutable (1) peut être commuté entre un état qui est transparent au rayonnement (100) incident sur un objet à examiner et un état qui est opaque au rayonnement (100) incident sur l'objet à examiner.

6. Spectromètre miniature (10) selon l'une des revendications précédentes, **caractérisé en ce qu'**une optique infinie (6a) est disposée sur le trajet de rayons à l'avant de l'unité optique ou à l'avant du diffuseur (1) .

7. Spectromètre miniature (10) selon l'une des revendications précédentes, **caractérisé en ce que** le spectromètre miniature (10) comprend une source lumineuse destinée à éclairer ou à éclairer par transillumination un objet à examiner.

8. Procédé destiné à faire fonctionner un spectromètre miniature (10) selon l'une des revendications précédentes, dans lequel le spectromètre miniature (10) est conçu pour fonctionner dans le mode de formation d'image (700) ou dans le mode spectromètre (701) et est commuté par un mode de commutation (704) entre le mode de formation d'image (700) et le mode spectromètre (701), dans lequel le mode de commutation (704)
- comprend une première commutation (703) dudit au moins un élément à cristaux liquides (3a, 3b, 3c) du mode de formation d'image (700) au mode spectromètre (701), et
- comprend une deuxième commutation (704) dudit au moins un élément à cristaux liquides (3a, 3b, 3c) du mode spectromètre (701) au mode de formation d'image (700).

9. Procédé selon la revendication 8 destiné à faire fonctionner un spectromètre miniature (10) selon la revendication 5, **caractérisé en ce que** le diffuseur commutable (1) est commuté de l'état transparent à l'état opaque lors de la première commutation (703) et **en ce que** le diffuseur commutable (1) est commuté de l'état opaque à l'état transparent lors de la deuxième commutation (704) .
